# EUROPEAN PATENT APPLICATION

(11) **EP 4 566 853 A1**
(43) Date of publication of application: **11.06.2025**
(21) Application number: 24217029.8
(22) Date of filing: 03.12.2024
(51) Int. Cl.: B60H 1/00, B60H 1/32, F25B 5/02

(54) **AIR-CONDITIONING APPARATUS FOR A MOTOR VEHICLE**

(30) Priority: 04.12.2023 IT 202300025827
(71) Applicant: FERRARI S.p.A., 41100 Modena (IT)
(72) Inventor: D'ANGELO, Enrico, 41100 MODENA (IT); SACCO, Paolo, 41100 MODENA (IT); VATA, Klajdi, 41100 MODENA (IT)
(74) Representative: Studio Torta S.p.A.

(57) **Abstract**

An air-conditioning apparatus (2) for a motor vehicle includes a refrigerant fluid circuit (4) configured to circulate a refrigerant fluid along a path (P) so as to realize a refrigeration cycle and comprising a compressor (5) to compress the refrigerant fluid, a condenser (6) to condense the refrigerant fluid, at least one first expansion valve device (7) to ingenerate a pressure drop on the condensed refrigerant fluid, and at least one first evaporator (8) downstream of the first expansion valve device (7), the first evaporator (8) being configured to evaporate the refrigerant fluid by heat exchange with an environment or device, thereby removing heat from the environment or device, characterized in that the refrigerant fluid circuit (4) comprises a bypass line (L) connecting a first node (14) of the path (P) downstream of the condenser (6) and upstream of the first evaporator (8) with a second node (15) of the path (P) downstream of the first evaporator (8) and upstream of the compressor (5), the bypass line (L) further comprising a valve means (16) controllable to regulate a flow of the refrigerant fluid from the first node to the second node (14, 15).

## Description

### CROSS-REFERENCE TO RELATED APPLICATIONS

This patent application claims priority from Italian patent application no. 102023000025827 filed on December 4, 2023, the entire disclosure of which is incorporated herein by reference.

### TECHNICAL FIELD

The invention concerns an air-conditioning apparatus for a motor vehicle.

### PRIOR ART

It is well known that motor vehicles may include an air-conditioning apparatus to condition the passenger compartment air or to cool components that generate heat in use, such as batteries, particularly in the case of hybrid electric or fully electric motor vehicles.

The air-conditioning unit normally includes the components to implement a refrigeration cycle, including a compressor, a condenser, and one or more parallel expansion valves followed by respective, downstream evaporators.

The components of the refrigeration cycle are passed through by a suitable refrigerant fluid, such as R134a or similar refrigerant fluids.

In some cases, before being compressed, the refrigerant fluid entering the compressor is also used to cool the power electronics for controlling the compressor.

Thus, the temperature of the refrigerant fluid upstream of the actual compression step of the refrigeration cycle is slightly higher than in cases where the power electronics are cooled in other ways.

In general, higher refrigerant fluid temperatures upstream of the compression step are associated with lower efficiency of the refrigeration cycle.

This is a drawback, which can be aggravated by high thermal load conditions corresponding to relatively higher temperatures of the refrigerant fluid entering the compressor.

In fact, under conditions of high thermal load, for example when simultaneous cooling of the passenger compartment and motor vehicle batteries is necessary, the higher temperature of the fluid entering the compressor could result in unsatisfactory cooling of the compressor's power electronics, thus leading to a further drawback.

In light of the above, there is a need to address at least one of the above-mentioned drawbacks.

One purpose of the invention is to meet this need, preferably in a simple manner that can be repeated.

### DESCRIPTION OF THE INVENTION

The purpose is achieved with an air-conditioning apparatus as defined in claim 1.

The dependent claims define particular embodiments of the invention.

### BRIEF DESCRIPTION OF THE DRAWINGS

Below, one embodiment of the invention will be described to better understand the same by way of non-limiting example and with reference to the attached drawings, wherein:
- Figure 1 is a perspective view of a motor vehicle comprising an air-conditioning apparatus according to the invention, and
- Figure 2 is a diagram of the air-conditioning apparatus of the motor vehicle in Figure 1.

### EMBODIMENTS OF THE INVENTION

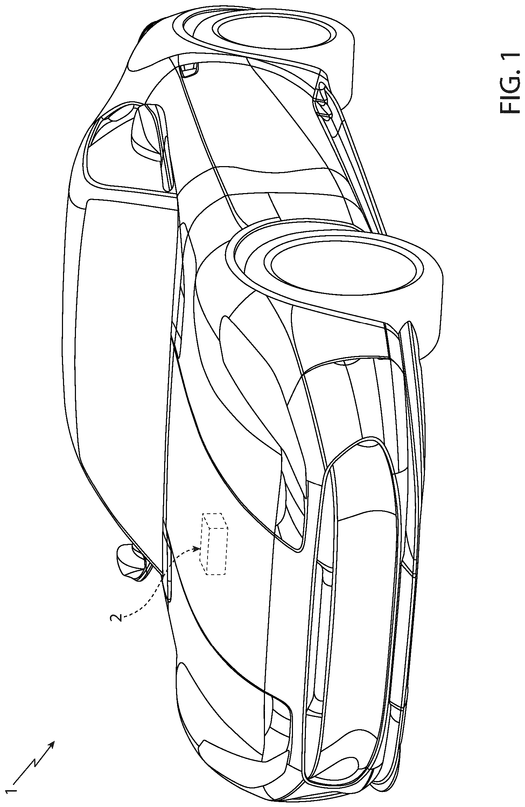

In Figure 1, the reference number 1 is used to indicate, as a whole, a vehicle, specifically a motor vehicle, in particular a sports or race car.

The motor vehicle 1 includes at least one passenger compartment (not illustrated) to accommodate a driver and possibly one or more passengers.

In addition, the motor vehicle 1 also comprises a plurality of devices, including one or more electrical devices, i.e. devices that use electricity in order to operate. These electrical devices can also produce a considerable amount of heat, so they may need cooling.

In detail, the motor vehicle 1 is a hybrid electric or fully electric vehicle. Thus, among the electrical devices, the motor vehicle 1 comprises at least one electrical energy storage device, such as a battery or super condenser, to store electrical energy.

Without loss of generality, examples of electrical devices can be an electric engine, power electronics, control units, and the like.

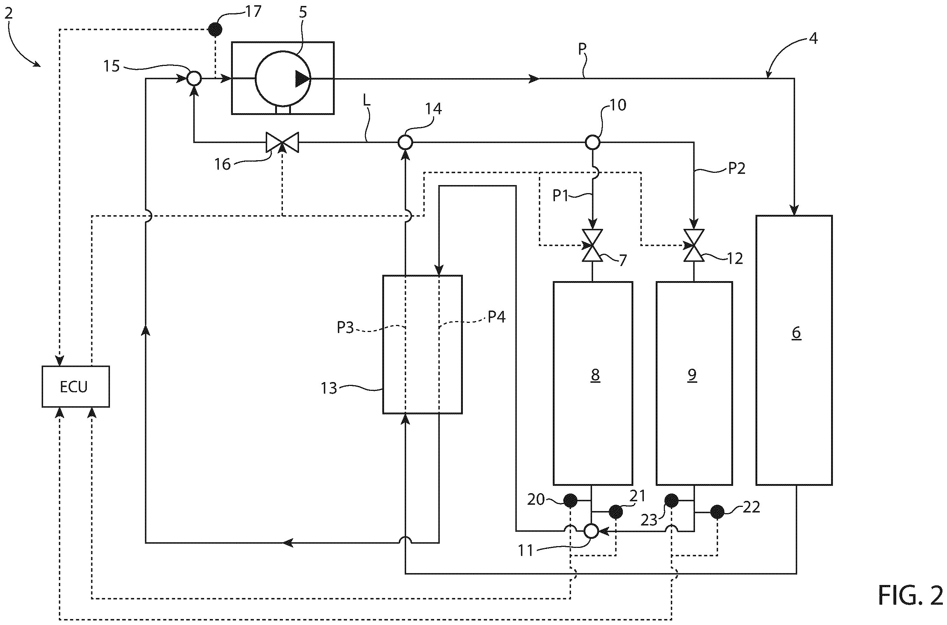

The motor vehicle 1 comprises an air-conditioning apparatus 2, schematically shown in Figure 2, to condition the passenger compartment and optionally to cool one or more electrical devices.

The air-conditioning apparatus 2 comprises at least one refrigerant fluid circuit 4 configured to circulate a refrigerant fluid along a path P.

The circuit 4 is preferably a closed-loop circuit, so the path P is a closed or closed-loop path.

In other words, the refrigerant fluid circulates through the circuit 4 along the path P, preferably cyclically, i.e. repeating the path P several times, more precisely without ever leaving the circuit 4, at least ideally, i.e. without micro losses in the circuit 4 or other issues associated with circuit 4 maintenance or malfunctions, or even without resupplying or choosing to replace the refrigerant fluid.

During a cycle of the refrigerant fluid in the circuit 4 along the path P, the air-conditioning apparatus 2 implements a refrigeration cycle, in particular a Kelvin or compression refrigeration cycle.

Along the path P, the circuit 4 comprises
- a compressor 5 configured to compress the refrigerant fluid,
- a condenser 6 arranged downstream of the compressor 5 and configured to condense the refrigerant fluid compressed by the compressor 5 via heat exchange with an additional fluid, for example air, more precisely, inside a motor compartment of the motor vehicle 1 or external air of the motor vehicle 1 suitably conveyed to the condenser 6,
- at least one expansion valve device or expansion valve 7 arranged downstream of the condenser 6 and configured to cause a pressure drop on at least part of the refrigerant fluid condensed by the condenser 6, and
- at least one evaporator 8 arranged downstream of the valve 7, in particular immediately or directly downstream of the valve 7, and configured to evaporate the refrigerant fluid by heat exchange with an environment or device of the motor vehicle 1, thus removing heat from the environment or device.

In this case, the environment or device coincides with the passenger compartment of the motor vehicle 1.

The circuit 4 also preferably includes a second evaporator 9 arranged in parallel with the evaporator 8.

The path P therefore splits into two branches P1 and P2 in parallel and comprising evaporators 8, 9 respectively.

Clearly, there could be more than two evaporators in parallel in the circuit 4.

Therefore, the circuit 4 could comprise one or more evaporators including the evaporator 8.

The branches P1, P2 meet again downstream of the evaporators 8, 9 in parallel, thus forming two nodes 10, 11 of the path P respectively arranged upstream and downstream of the evaporators 8, 9 in parallel.

The evaporator 9 has a similar function to that of the evaporator 8; in the example described and illustrated, the evaporator 9, however, removes heat specifically from one or more electrical devices of the motor vehicle 1, in particular from the electrical energy storage device mentioned above.

In the embodiment illustrated, the circuit also comprises a second expansion valve device or expansion valve 12 arranged upstream of the evaporator 9 or more precisely immediately upstream of the evaporator 9 and in parallel with the expansion valve 7 and the evaporator 8. In other words, the expansion valve 12 belongs to the branch P2 of the path P.

The expansion valve 12 has a similar function to that of the expansion valve 7, but is independently controllable with respect to the latter, so that the pressure drops generated by the expansion valves 7, 12 on the respective parts of the refrigerant fluid condensed by the condenser 6 are respectively adapted to the heat to be removed via the respective, downstream evaporators 8, 9.

Alternatively, the expansion valves 7, 12 could have been replaced by a single expansion valve located upstream of the node 10 and optionally by generic, controllable valve devices 7, 12 with the function of distributing the refrigerant fluid exiting the single expansion valve to the branches P1, P2, i.e. to the evaporators 8, 9 in parallel.

The circuit 4 also, preferably comprises an internal heat exchanger 13 arranged along the path P and configured to implement heat exchange, i.e. to bring into thermal contact, the refrigerant fluid exiting the condenser 6 with the refrigerant fluid coming from the node 11, wherein the latter removes heat from the refrigerant fluid exiting the condenser 6.

The section of the path P along which the refrigerant fluid leaving the condenser 6 passes through the internal heat exchanger 13 is indicated by the reference symbol P3 in Figure 2. The section of the path P along which the refrigerant fluid coming from the node 11 passes through the internal heat exchanger 13 is indicated by the reference symbol P4 in Figure 2.

In other words, the path P comprises the section P3 through the internal heat exchanger 13 for the passage of the refrigerant fluid leaving the condenser 6 (through the internal heat exchanger 13), as well as the section P4 through the internal heat exchanger 13 for the passage of the refrigerant fluid leaving the evaporator 8 (through the internal heat exchanger 13).

As can be directly and unequivocally derived from Figure 2, irrespective of the other details illustrated, each of the sections P3, P4 extends through the internal heat exchanger 13 between an inlet and an outlet of the internal heat exchanger 13.

Clearly, if the evaporator 9 were not included, the heat exchange at the internal heat exchanger 13 would have taken place between the refrigerant fluid leaving the condenser 6 (in the section P3) and the refrigerant fluid leaving the evaporator 8 (in the section P4).

According to the invention, the circuit 4 comprises a bypass line L connecting a node 14 of the path P downstream of the condenser 6 and upstream of the evaporator 8 with a node 15 of the path P downstream of the evaporator 8 and upstream of the compressor 5.

More specifically, the node 14 is upstream of the node 10, i.e. upstream of both evaporators 8, 9 in parallel, just as the node 15 is downstream of the node 11, i.e. downstream of both evaporators 8, 9 in parallel.

The evaporator 9 is therefore placed downstream of the node 14 and in parallel with the evaporator 8.

In the case of a larger number of parallel evaporators, the node 14 would be upstream of all the parallel evaporators in the circuit 4, just as the node 15 would be downstream of all the parallel evaporators in the circuit 4.

In other words, the path P would have the node 10 upstream of all the parallel evaporators in the circuit 4, just as it would have the node 11 downstream of all the parallel evaporators in the circuit 4, so that the node 14 would be upstream of the node 10, just as the node 15 would be downstream of the node 11.

Thus, in summary, in the alternative case of several evaporators, the path P would have a first node upstream of all the evaporators and a second node downstream of all the evaporators (the first and second nodes being formed from branches respectively comprising the evaporators), with the node 14 upstream of the first node and the node 15 downstream of the second node.

In other words, the node 14 would be downstream of the condenser 6 and upstream of all the evaporators, just as the node 15 would be downstream of all the evaporators and upstream of the compressor 5.

Moreover, in detail, the node 14 is downstream of the internal heat exchanger 13 (more precisely downstream of the section P3), just as the node 15 is downstream of the internal heat exchanger 13 (more precisely downstream of the section P4).

The node 15 is advantageously placed immediately upstream of the compressor 5.

Therefore, the internal heat exchanger 13 is configured to implement heat exchange between the refrigerant fluid circulating between the condenser 6 and the node 14 and the refrigerant fluid circulating between the evaporator 8 or, more precisely, the nodes 11 and 15.

The bypass line L extends from the node 14 to the node 15.

In addition, the bypass line L includes a valve device 16 that can be controlled to regulate a flow of the refrigerant fluid from the node 14 to the node 15 by bypassing the evaporator 8 or more precisely both (i.e. all) the evaporators 8, 9, i.e. by bypassing the branches P1, P2 (i.e. all the branches).

The valve device 16 preferably has a function similar to that of the expansion valves 7, 12, so it comprises an expansion valve device or expansion valve.

Alternatively, the valve device 16 could be added to a separate, specific, expansion valve provided upstream of the node 14 and, in particular, downstream of the internal heat exchanger 13 (more precisely downstream of the section P3). This additional expansion valve could even coincide with or be additional to the one expansion valve upstream of the node 10 to replace the expansion valves 7, 12, as in the variant mentioned above. In the latter case, the valve devices 7, 12, 16 could be controlled with the function of distributing the refrigerant fluid exiting the single expansion valve to the branches P1, P2, and the bypass line L respectively.

The valve device 16 is preferably arranged in parallel with the expansion valves 7, 12.

In addition, the valve device 16 specifically is or includes a proportional servo valve, e.g. a position-controlled one.

The apparatus 2 comprises a control unit ECU configured to control the valve device 16 according to a target temperature for the refrigerant fluid entering the compressor 5.

In fact, the refrigerant fluid tapped from the node 14 via the valve device 16 mixes at the node 15 with the superheated refrigerant fluid from the node 11, i.e. from one or both evaporators 8, 9. Since the refrigerant fluid in the bypass line L is colder than that coming from the node 11, mixing produces a controlled cooling via the valve device 16 of the refrigerant fluid at the node 15, i.e. upstream or more precisely immediately upstream of the compressor 5.

The control of the valve device 16 could take place in an open loop, i.e. specifically by adjusting the position of the valve device 16 according to the target temperature.

More preferably, the control of the valve device 16 takes place in a closed loop, i.e. on the basis of a comparison or difference between an actual temperature of the refrigerant fluid entering the compressor 5 and the target temperature.

In this regard, the apparatus 2 includes a transducer 17, for example applied at the node 15 or in any case between the node 15 and the compressor 5. The transducer 17 is configured to detect an indicative quantity of the actual temperature of the refrigerant fluid upstream of the compressor 5 or at its inlet, i.e. more precisely, between the node 15 and the compressor 5 along the path P.

The transducer 17 is also coupled to the control unit ECU and configured to generate a signal relating to the measured quantity.

The control unit ECU receives the signal from the transducer 17 and determines an indication of the actual temperature of the refrigerant fluid entering the compressor 5 from the signal.

Thus, the control unit ECU compares the actual temperature indication from the transducer 17 signal with the target temperature and controls the valve device 16 based on this comparison. In other words, the control unit ECU performs a comparison between the actual temperature indicated by the signal and the target temperature, and then controls the valve device 16 based on this comparison.

For example, the control of the valve device 16 can be according to a proportional, proportional-integrative, or PID (proportional-integrative-derivative) control law, with respect to the comparison or difference between the actual temperature and the target temperature.

Specifically, the control unit ECU determines a control signal as an output of the control law; the control signal is then used by the control unit ECU to control the position of the valve device 16 according to the control law.

The control unit ECU preferably controls an opening of the valve device 16, i.e. activates a flow of refrigerant fluid through the bypass line L (vice versa prevented by a closure of the valve device 16), only when or more simply when the expansion valves 7, 12 are both open, i.e. allow respective flows of the refrigerant fluid through the evaporators 8, 9 (vice versa prevented by a respective closure of the expansion valves 7, 12).

Alternatively or additionally, the control unit ECU commands an opening of the valve device 16 only when or more simply when the thermal load or a value of the thermal load associated with the evaporator 8 and/or the evaporator 9 exceeds a threshold value, e.g. stored in the control unit ECU (the thermal load associated with both evaporators 8, 9 would be given, for example, by the sum of their relative individual thermal loads).

The thermal load could be defined by a quantity or a combination (e.g. linear) of quantities such as a temperature difference between the actual and desired temperature for the environment or device in thermal contact with the evaporator 8 or 9, an amount of heat to be removed from the same environment or device, a quantity indicative of the overheating of the refrigerant fluid at the evaporator 8 or 9 (e.g. enthalpy, temperature, pressure, etc.), and the like.

In this case, the apparatus 2 would comprise one or more further transducers respectively configured to detect the one or more quantities identifying the thermal load associated with the evaporator 8 and/or the evaporator 9.

The control of the valve device 16 could preferably take place in the context of a control law with multiple inputs and multiple outputs (MIMO control law - Multi-Input-Multi-Output), clearly including the control signal of the valve device 16 and the indicative value of the inlet temperature at the compressor 5 as one of the inputs and one of the outputs respectively. The control law is executed by the control unit ECU.

In addition, the inputs also include, for example, respective control signals to control the expansion valves 7, 12 and, more specifically, their position, respectively, or only one of these control signals. The control signals are emitted by the control unit ECU according to the outputs that can be detected and acquired by the control unit ECU.

The outputs include e.g. two quantities respectively of the refrigerant fluid parts downstream of the respective evaporators 8, 9, or only one of these quantities. Each of these quantities can be either a temperature or a pressure of the refrigerant fluid.

Alternatively or additionally, the outputs may include several quantities, such as a quantity indicative of the temperature and a quantity indicative of the pressure, relative to one of the parts of the refrigerant fluid downstream of the evaporator 8 and/or the evaporator 9.

Therefore, the apparatus 2 could comprise a transducer 20 and/or a transducer 21 configured, respectively, to detect quantities, such as the quantity indicative of the temperature and the quantity indicative of the pressure, of the refrigerant fluid downstream of the evaporator 8, as well as a transducer 22 and/or a transducer 23 configured to detect quantities, such as the quantity indicative of the temperature and the quantity indicative of the pressure, of the refrigerant fluid downstream of the evaporator 9.

In this example, each of the transducers 20, 21, 22, 23 is configured to generate a corresponding signal related to the measured quantity and is coupled to the control unit ECU, so that the control unit ECU receives the corresponding signal and determines a corresponding output from it.

The control law could be configured, in addition to reducing a difference or error between the actual temperature and the target temperature of the refrigerant fluid at the inlet of the compressor 5, also to reduce one or more additional differences between a difference or error between the actual temperature and a target temperature of the refrigerant fluid downstream of the evaporator 8, a difference or error between the actual pressure and a target pressure of the refrigerant fluid downstream of the evaporator 8, a difference or error between the actual temperature and a target temperature of the refrigerant fluid downstream of the evaporator 8, and a difference or error between the actual pressure and a target pressure of the refrigerant fluid downstream of the evaporator 9.

For example, the control law could be implemented according to a representation in space of the states, in particular where the states include one or more of the mentioned errors, in addition to the error on the compressor 5 inlet temperature.

Alternatively, the control law could be made up of a plurality of independent proportional or proportional-integrative, or PID control laws, each configured to determine the relevant control signal (of the expansion valve 7 or 12) or input as a function of one or more of the aforementioned errors (e.g. as a function of a linear combination of an error regarding temperature and an error regarding pressure, in particular proportional to that linear combination).

From the above, the advantages of the apparatus 2 according to the invention are clear.

The cooling of the refrigerant fluid immediately upstream of the compressor 5 by bleeding the refrigerant fluid, with pressure drop, downstream of the condenser 6 allows a decrease in the temperature at the inlet of the compressor 5 with benefits for the efficiency of the refrigeration cycle, as well as for the cooling effectiveness of the power electronics elements of the compressor 5.

In addition, the control implemented via the control unit ECU ensures that the target temperature is reached in a stable manner, as well as the possibility of closing the bypass line L when not required, e.g. because the thermal load associated with the evaporators 8, 9 is relatively low.

Finally, it is clear that changes may be made to the apparatus 2 according to the invention, and variations produced thereto, that, in any case, do not depart from the scope of protection defined by the claims.

In particular, each of the devices schematically represented in the figures is independent of the other details and is, specifically, devised to resolve specific technical problems in isolation to the other details.

## Claims

1. An air-conditioning apparatus (2) for a motor vehicle, the air-conditioning apparatus comprising a refrigerant fluid circuit (4) configured to circulate a refrigerant fluid along a path (P) so as to realize a refrigeration cycle, the refrigerant fluid circuit (4) comprising along the path (P)
- a compressor (5) configured to compress the refrigerant fluid,
- a condenser (6) configured to condense the refrigerant fluid compressed by the compressor (5) by heat exchange with an additional fluid,
- at least one first expansion valve device (7) configured to ingenerate a pressure drop on at least part of the refrigerant fluid condensed by the condenser (6), thereby causing a cooling thereof, and
- at least one first evaporator (8) downstream of the first expansion valve device (7), the first evaporator (8) being configured to evaporate the refrigerant fluid by heat exchange with an environment or device, thereby removing heat from the environment or device,
**characterized in that** the refrigerant fluid circuit (4) comprises a bypass line (L) connecting a first node (14) of the path (P) downstream of the condenser (6) and upstream of the first evaporator (8) with a second node (15) of the path (P) downstream of the first evaporator (8) and upstream of the compressor (5), the bypass line (L) further comprising a valve means (16) controllable to regulate a flow of the refrigerant fluid from the first node to the second node (14, 15) bypassing the first evaporator (8).

2. The air-conditioning apparatus according to claim 1, wherein the refrigerant fluid circuit (4) further comprises a second evaporator (9) arranged downstream of the first node (14) and in parallel with the first evaporator (8), the second evaporator (9) being configured to evaporate the refrigerant fluid by heat exchange with an additional environment or device, thereby removing heat from the additional environment or device, wherein the second node (15) is arranged downstream of the second evaporator (9).

3. The air-conditioning apparatus according to claim 2, wherein the refrigerant fluid circuit (4) further comprises a second expansion valve device (12) arranged upstream of the second evaporator (9) and in parallel with the first expansion valve device (7) and the first evaporator (8), the second expansion valve device (12) being configured to ingenerate a pressure drop on a further portion of the refrigerant fluid condensed from the condenser (6), thereby causing a cooling thereof.

4. The air-conditioning apparatus according to claim 3, wherein the valve means (16) is arranged in parallel with the first and second expansion valve devices (7, 12).

5. The air-conditioning apparatus according to any one of the preceding claims, wherein the refrigerant fluid circuit (4) further comprises an internal heat exchanger (13) configured to realize a heat exchange between the refrigerant fluid circulating between the condenser (6) and the first node (14) and the refrigerant fluid circulating between the first evaporator (8) and the second node (15).

6. The air-conditioning apparatus according to claim 5, wherein the first node (14) is downstream of the internal heat exchanger (13), and wherein the second node (15) is downstream of the internal heat exchanger (13).

7. The air conditioning apparatus according to claim 5, wherein the path (P) comprises:
- a first section (P3) through the internal heat exchanger (13) for a passage of refrigerant fluid exiting the condenser (6), and
- a second section (P4) through the internal heat exchanger (13) for a passage of refrigerant fluid exiting the first evaporator (8),
the first node (14) being downstream of the first section (P3), the second node (15) being downstream of the second section (P4).

8. The air-conditioning apparatus according to any one of the preceding claims, further comprising a control unit (ECU) configured to control the valve means (16) according to a target temperature for the refrigerant fluid entering the compressor (5).

9. The air-conditioning apparatus according to claim 8, further comprising a transducer (17) configured to detect a quantity indicative of an actual temperature of the refrigerant fluid entering the compressor (5) and to generate a corresponding temperature signal, the control unit (ECU) being coupled to the transducer (17) so as to receive the temperature signal and control the valve means (16) based on a comparison between the actual temperature indicated by the temperature signal and the target temperature.

10. The air-conditioning apparatus according to any one of the preceding claims, wherein the valve means (16) comprises a proportional servo valve.

11. A motor vehicle (1) comprising an air conditioning apparatus (2) according to any one of the preceding claims.

12. The motor vehicle (1) comprising a passenger compartment, at least one electrical device, and an air-conditioning apparatus (2) according to any one of claims 2 to 4, wherein the first and second evaporators (8, 9) are respectively configured to subtract heat from the passenger compartment and the electrical device.

13. The motor vehicle according to claim 12, wherein the electrical device comprises an electrical energy storage device for storing electrical energy.
